# EUROPÄISCHE PATENTSCHRIFT

(11) **EP 2 898 009 B1**
(45) Veröffentlichungstag und Bekanntmachung des Hinweises auf die Patenterteilung: **12.10.2016**
(21) Anmeldenummer: 13750032.8
(22) Anmeldetag: 13.08.2013
(51) Int. Cl.: C08K 3/00, C08K 3/02, C08K 3/32, C08L 77/00

(54) **FLAMMGESCHÜTZTE POLYAMIDE MIT HELLER FARBE**
FLAME-PROOF POLYAMIDES WITH BRIGHT COLOUR
POLYAMIDE IGNIFUGE AVEC TEINTE CLAIRE

(30) Priorität: 19.09.2012 EP 12184935
(43) Veröffentlichungstag der Anmeldung: 29.07.2015
(73) Patentinhaber: BASF SE, 67056 Ludwigshafen am Rhein (DE); BASF Schweiz AG, 4057 Basel (CH)
(72) Erfinder: ROTH, Michael, 64686 Lautertal (DE); KÖNIG, Alexander, 76646 Bruchsal (DE); DEGLMANN, Peter, 68163 Mannheim (DE); USKE, Klaus, 67098 Bad Dürkheim (DE); MINGES, Christoph, 76835 Burrweiler (DE)
(74) Vertreter: BASF IP Association
(86) Internationale Anmeldenummer: PCT/EP2013/066876
(87) Internationale Veröffentlichungsnummer: WO 2014/044471

(56) Entgegenhaltungen:
- DATABASE WPI Week 200231 Thomson Scientific, London, GB; AN 2002-262840 XP002690511, -& JP 2001 348493 A (TEIJIN LTD) 18. Dezember 2001 (2001-12-18)

## Beschreibung

Die Erfindung betrifft die Verwendung von Cu- und/oder Ag-Verbindungen zur Herstellung von thermoplastischen Formmassen, enthaltend
A) 10 bis 99,8 Gew.-% eines thermoplastischen Polyamids,
B) 0,1 bis 60 Gew.-% roter Phosphor,
C) 0,01 bis 4 Gew.-% eines Cu-(I)- oder Ag-(I)-Salzes oder -Oxids oder -Komplexes oder deren Mischungen,
D) 0 bis 40 Gew.-% eines Schlagzähmodifiers,
E) 0 bis 60 Gew.-% weiterer Zusatzstoffe,
wobei die Summe der Gewichtsprozente A) bis E) 100 % ergibt, wobei die Formmassen mindestens 15 % niedrigere Δ L Farbwerte im Vergleich zu PA Formmassen ohne Komponente C) gemäß Anspruch 1 (gemäß DIN 53236 und ISO 7724-3, CieLab Verfahren) aufweisen.

Weiterhin betrifft die Erfindung die Verwendung von Cu-(I)- und/oder Ag-(I)-Verbindungen zur Herstellung von PA-Formmassen mit bestimmten Farbwerten, sowie verbesserter UV-Stabilität sowie verminderter Phosphinemission.

Außerdem betrifft die vorliegende Erfindung die Verwendung derartiger Formmassen zur Herstellung von Fasern, Folien und Formkörpern und die hierbei erhältlichen Formkörper, Fasern und Folien jeglicher Art.

Es ist bekannt, dass der Zusatz von rotem Phosphor zu thermoplastischen Kunststoffen, vor allem zu verstärkten oder gefüllten Polyamiden, zu einem wirksamen Brandschutz führt (DE-A-1931387). Roter Phosphor neigt jedoch unter ungünstigen Bedingungen, wie z.B. erhöhter Temperatur, Feuchtigkeit, Gegenwart von Alkali oder Sauerstoff, zur Bildung von Zersetzungsprodukten, wie Phosphorwasserstoff und Säuren des 1- bis 5-wertigen Phosphors. In thermoplastischen Kunststoffen, z.B. Polyamide, eingearbeiteter roter Phosphor ist zwar infolge der Einbettung in das Polymere gegen Thermooxidation weitgehend geschützt, es kann jedoch auch hier längerfristig zur Bildung von Zersetzungsprodukten kommen. Dies ist insofern von Nachteil, da bei unsachgemäßer Verarbeitung von Granulaten im Spritzgussverfahren das sich bildende Phosphin zu Geruchsbelästigungen führen kann und zudem toxisch ist. Die gleichzeitig entstehenden Säuren des Phosphors können sich an der Oberfläche von Formteilen ausscheiden, wodurch vor allem die Kriechstromfestigkeit der Formteile herabgesetzt wird. Es hat daher nicht an Versuchen gefehlt, die Stabilität des als Flammschutzmittel für Kunststoffe eingesetzten roten Phosphors zu verbessern.

Eine stabilisierende Wirkung für Polyamid kann durch Zugabe von Oxiden oder Hydroxiden des Zinks, Magnesiums oder Kupfers erreicht werden, siehe beispielsweise WO2000/22035 (Wärmealterungsbeständigkeit von Cu-Verbindungen und Komplexen in Polyamiden), EP1211220 (Beschichtung von rotem Phosphor mit metallischem Silber), EP-A-283 759 (Phlegmatisierung des Phosphors mit Sn-Oxidhydrat und MF-Harzen, DE-A-10332852 (Beschichtung des roten Phosphors mit Weißpigmenten auf TiO₂-Basis und MF-Harzen.

Aus dem Stand der Technik bekannte Formmassen weisen jedoch eine ungewünschte rötliche Eigenfarbe mit entsprechend schlechter Einfärbbarkeit für helle und graue Anwendungen auf. Die UV-Stabilität ist verbesserungsbedürftig.

Darüber hinaus setzen flammgeschützte Polyamidcompounds mit rotem Phosphor - speziell während der Verarbeitung - geringe Mengen Phosphorwasserstoff frei. Phosphin ist einerseits giftig und führt andererseits zu Bildung von Kontaktbelägen auf metallischen Leitern. Zur Stabilisierung des Phosphors wird dem Polyamidcompound ein Säurefänger zugesetzt, um die säurekatalysierte Disproportionierung des Phosphors zu Phosphin zu verhindern. Damit wird jedoch die Entstehung bzw. Komplexierung von Phosphin nicht nachhaltig verhindert.

Aufgabe der vorliegenden Erfindung war es daher, mit rotem Phosphor flammgeschützte Polyamide zur Verfügung zu stellen, welche eine geringe rötliche Eigenfarbe, verbesserte Einfärbung für helle und graue Anwendungen, bessere UV-Stabilität und eine geringere Phosphinbildung aufweisen.

Demgemäß wurden die eingangs definierte Verwendung gefunden. Bevorzugte Ausführungsformen können den Unteransprüchen entnommen werden.

Es wurde gefunden, dass der Zusatz geringer Mengen an Cu-(I) und/oder Ag-(I)-Verbindungen zu flammgeschützten Polyamidcompounds auf Basis von rotem Phosphor zu einer Farbveränderung von Rot nach grauer Färbung des Compounds führt. Die resultierende Farbe ist überraschenderweise unter Bestrahlung mit (UV) Licht farbstabil und eignet sich somit für helle Einfärbungen. Darüber hinaus wurde gefunden, dass der Zusatz der erfindungsgemäßen Verbindungen zu einer starken Reduktion der Freisetzung von Phosphin aus den flammgeschützten Polyamidcompounds führt.

Als Komponente A) enthalten die erfindungsgemäßen Formmassen 10 bis 98, vorzugsweise 20 bis 98 und insbesondere 30 bis 90 Gew.-% mindestens eines Polyamides.

Die Polyamide der erfindungsgemäßen Formmassen weisen im allgemeinen eine Viskositätszahl von 90 bis 350, vorzugsweise 110 bis 240 ml/g auf, bestimmt in einer 0,5 gew.-%igen Lösung in 96 gew.%iger Schwefelsäure bei 25°C gemäß ISO 307.

Halbkristalline oder amorphe Harze mit einem Molekulargewicht (Gewichtsmittelwert) von mindestens 5.000, wie sie z.B. in den amerikanischen Patentschriften 2 071 250, 2 071 251, 2 130 523, 2 130 948, 2 241 322, 2 312 966, 2 512 606 und 3 393 210 beschrieben werden, sind bevorzugt.

Beispiele hierfür sind Polyamide, die sich von Lactamen mit 7 bis 13 Ringgliedern ableiten, wie Polycaprolactam, Polycapryllactam und Polylaurinlactam sowie Polyamide, die durch Umsetzung von Dicarbonsäuren mit Diaminen erhalten werden.

Als Dicarbonsäuren sind Alkandicarbonsäuren mit 6 bis 12, insbesondere 6 bis 10 Kohlenstoffatomen und aromatische Dicarbonsäuren einsetzbar. Hier seien nur Adipinsäure, Azelainsäure, Sebacinsäure, Dodecandisäure und Terephthal- und/oder Isophthalsäure als Säuren genannt.

Als Diamine eignen sich besonders Alkandiamine mit 6 bis 12, insbesondere 6 bis 8 Kohlenstoffatomen sowie m-Xylylendiamin (z.B. Ultramid^{®} X17 der BASF SE, ein 1:1 molares Verhältnis von MXDA mit Adipinsäure), Di-(4-aminophenyl)methan, Di-(4-amino-cyclohexyl)-methan, 2,2-Di- (4-aminophenyl)-propan, 2,2-Di-(4-aminocyclohexyl)-propan oder 1,5-Diamino-2-methylpentan.

Bevorzugte Polyamide sind Polyhexamethylenadipinsäureamid, Polyhexamethylensebacinsäureamid und Polycaprolactam sowie Copolyamide 6/66, insbesondere mit einem Anteil von 5 bis 95 Gew.-% an Caprolactam-Einheiten (z.B. Ultramid^{®} C31 der BASF SE).

Weiterhin geeignete Polyamide sind erhältlich aus ω-Aminoalkylnitrilen wie beispielsweise Aminocapronitril (PA 6) und Adipodinitril mit Hexamethylendiamin (PA 66) durch sog. Direktpolymerisation in Anwesenheit von Wasser, wie beispielsweise in der DE-A 10313681, EP-A 1198491 und EP 922065 beschrieben.

Außerdem seien auch noch Polyamide erwähnt, die z.B. durch Kondensation von 1,4-Diaminobutan mit Adipinsäure unter erhöhter Temperatur erhältlich sind (Polyamid 4,6). Herstellungsverfahren für Polyamide dieser Struktur sind z.B. in den EP-A 38 094, EP-A 38 582 und EP-A 39 524 beschrieben.

Weiterhin sind Polyamide, die durch Copolymerisation zweier oder mehrerer der vorgenannten Monomeren erhältlich sind, oder Mischungen mehrerer Polyamide geeignet, wobei das Mischungsverhältnis beliebig ist. Besonders bevorzugt sind Mischungen von Polyamid 66 mit anderen Polyamiden, insbesondere Copolyamide 6/66.

Weiterhin haben sich solche teilaromatischen Copolyamide wie PA 6/6T und PA 66/6T als besonders vorteilhaft erwiesen, deren Triamingehalt weniger als 0,5, vorzugsweise weniger als 0,3 Gew.-% beträgt (siehe EP-A 299 444). Weitere hochtemperaturbeständige Polyamide sind aus der EP-A 19 94 075 bekannt (PA 6T/6I/MXD6).

Die Herstellung der bevorzugten teilaromatischen Copolyamide mit niedrigem Triamingehalt kann nach den in den EP-A 129 195 und 129 196 beschriebenen Verfahren erfolgen.

Die nachfolgende nicht abschließende Aufstellung enthält die genannten, sowie weitere Polyamide A) im Sinne der Erfindung und die enthaltenen Monomeren.
- AB-Polymere: PA 4: Pyrrolidon
- PA 6: ε-Caprolactam
- PA 7: Ethanolactam
- PA 8: Capryllactam
- PA 9: 9-Aminopelargonsäure
- PA 11: 11-Aminoundecansäure
- PA 12: Laurinlactam
- AA/BB-Polymere PA 46: Tetramethylendiamin, Adipinsäure
- PA 66: Hexamethylendiamin, Adipinsäure
- PA 69: Hexamethylendiamin, Azelainsäure
- PA 610: Hexamethylendiamin, Sebacinsäure
- PA 612: Hexamethylendiamin, Decandicarbonsäure
- PA 613: Hexamethylendiamin, Undecandicarbonsäure
- PA 1212: 1,12-Dodecandiamin, Decandicarbonsäure
- PA 1313: 1,13-Diaminotridecan, Undecandicarbonsäure
- PA 6T: Hexamethylendiamin, Terephthalsäure
- PA 9T: 1,9-nonanediamin, Terephthalsäure
- PA MXD6: m-Xylylendiamin, Adipinsäure
- PA 6I: Hexamethylendiamin, Isophthalsäure
- PA 6-3-T: Trimethylhexamethylendiamin, Terephthalsäure
- PA 6/6T: (siehe PA 6 und PA 6T)
- PA 6/66: (siehe PA 6 und PA 66)
- PA 6/12: (siehe PA 6 und PA 12)
- PA 66/6/610: (siehe PA 66, PA 6 und PA 610)
- PA 6I/6T: (siehe PA 6I und PA 6T)
- PA PACM 12: Diaminodicyclohexylmethan, Laurinlactam
- PA 6I/6T/PACM: wie PA 6I/6T + Diaminodicyclohexylmethan
- PA 12/MACMI: Laurinlactam, Dimethyl-diaminodicyclohexylmethan, Isophthalsäure
- PA 12/MACMT: Laurinlactam, Dimethyl-diaminodicyclohexylmethan, Terephthalsäure
- PA PDA-T: Phenylendiamin, Terephthalsäure

Bevorzugtes Flammschutzmittel B) ist elementarer roter Phosphor, insbesondere in Kombination mit glasfaserverstärkten Formmassen, der in unbehandelter Form eingesetzt werden kann.

Besonders eignen sich jedoch Zubereitungen, in denen der Phosphor oberflächlich mit niedermolekularen flüssigen Substanzen wie Silikonöl, Paraffinöl oder Estern der Phthalsäure (insbesondere Dioctylphthalat, s. EP 176 836) oder Adipinsäure oder mit polymeren oder oligomeren Verbindungen, z.B. mit Phenolharzen oder Aminoplasten sowie Polyurethanen beschichtet sind (s. EP-A 384 232, DE-A 196 48 503). Derartige sogenannte Phlegmatisierungsmittel sind in der Regel in Mengen von 0,05 bis 5 Gew.-%, bezogen auf 100 Gew.-% B) enthalten.

Außerdem sind Konzentrate von rotem Phosphor, z.B. in einem Polyamid oder Elastomeren als Flammschutzmittel geeignet. Insbesondere eignen sich Polyolefinhomo- und -copolymere als Konzentratpolymere. Jedoch sollte der Anteil des Konzentratpolymeren -falls kein Polyamid als Thermoplast eingesetzt wird- nicht mehr als 35 Gew.-% bezogen auf das Gewicht der Komponenten A) und B) in der erfindungsgemäßen Formmassen betragen.

Bevorzugte Konzentratzusammensetzungen sind
B₁) 30 bis 90 Gew.-%, vorzugsweise von 45 bis 70 Gew.-% eines Polyamids oder Elastomeren,
B₂) 10 bis 70 Gew.-%, vorzugsweise von 30 bis 55 Gew.% roter Phosphor.

Das eingesetzte Polyamid für den Batch kann verschieden von A) sein oder bevorzugt gleich A) sein, damit Unverträglichkeiten oder Schmelzpunktdifferenzen keine negative Auswirkung auf die Formmasse aufweisen.

Ein anderes Verfahren zur Einarbeitung der erfindungsgemäßen Additive C) sieht vor, den roten Phosphor in einer wässrigen Lösung oder Suspension des entsprechenden Additivs zu suspendieren. Anschließend filtriert man, wäscht mit Wasser und trocknet den auf diese Weise erhaltenen, mit dem jeweiligen Additiv C) oberflächenbenetzten Phosphor und trocknet unter Schutzgas. Der modifizierte Phosphor kann anschließend mit geeigneten Verarbeitungsmaschinen in thermoplastische Formmassen eingearbeitet werden.

Die mittlere Teilchengröße (d₅₀) der in den Formmassen verteilten Phosphorpartikel liegt bevorzugt im Bereich von 0,0001 bis 0,5 mm; insbesondere von 0,001 bis 0,2 mm.

Der Gehalt der Komponente B) in den erfindungsgemäßen Formmassen beträgt 0,1 bis 60, bevorzugt 0,5 bis 40 und insbesondere 1 bis 15 Gew.-%, bezogen auf die Summe der Komponenten A) bis E).

Als Komponente C) enthalten die erfindungsgemäßen Formmassen 0,01 bis 4, vorzugsweise 0,1 bis 3 und insbesondere 0,1 bis 2 Gew.-% und ganz besonders bevorzugt 0,1 bis 1,5 Gew.-% eines Cu-(I)- oder Ag-(I)-Salzes oder -Oxids oder -Komplexes oder deren Mischungen.
Geeignete Cu-(I) oder Ag-(I)-Komplexe enthalten als Liganden Triphenylphosphine, Mercaptobenzimidazole, EDTA, Acetylacetonate, Glycin, Ethylendiamine, Oxalate, Diethylentriamine, Triethylentetraamine, Pyridine, Diphosphone und Dipyridyle.

Diese Liganden können einzeln oder in Kombination zur Komplexbildung eingesetzt werden. Die dazu nötigen Synthesen sind dem Fachmann bekannt oder in der Fachliteratur zur Komplexchemie beschrieben. Wie üblich können diese Komplexe neben den oben genannten Liganden noch typische anorganische Liganden enthalten wie Wasser, Chlorid, Cyanoliganden usw.

Bevorzugt sind Kupferkomplexe mit den Komplexliganden Triphenylphosphine, Mercaptobenzimidazole, Acetylacetonate und Glycin. Insbesondere bevorzugt sind Triphenylphosphine und Mercaptobenzimidazole.

Bevorzugte erfindungsgemäß eingesetzte Komplexe des Kupfers werden üblicherweise durch Reaktion von Kupfer(I)ionen mit den Phosphin- bzw. Mercaptobenzimidazolverbindungen gebildet. Beispielsweise können diese Komplexe durch Umsetzung von Triphenylphosphin mit einem in Chloroform suspendierten Kupfer(I)halogenid erhalten werden (G. Kosta, E. Reisenhofer und L. Stafani, J. Inorg. Nukl. Chem. 27 (1965) 2581). Es ist aber auch möglich, Kupfer(II)verbindungen mit Triphenylphosphin reduktiv umzusetzen, um so die Kupfer(I)additionsverbindungen zu erhalten (F.U. Jardine, L. Rule, A.G. Vohrei, J. Chem. Soc. (A) 238-241 (1970)). Weitere Verfahren sind dem Fachmann bekannt.

Prinzipiell sind alle Alkyl- oder Arylphosphine geeignet. Beispiele erfindungsgemäß einsetzbarer Phosphine sind Triphenylphosphin sowie die substituierten Triphenylphosphine, Trialkylphosphine, aber auch Diarylphosphine. Ein Beispiel eines geeigneten Trialkylphosphins ist Tris-(n-butyl)phosphin. Triphenylphosphin ist aufgrund der kommerziellen Verfügbarkeit vor allem in wirtschaftlicher Hinsicht bevorzugt. Generell sind aber die Triphenylphosphinkomplexe stabiler als die Trialkylphosphinkomplexe.

Beispiele geeigneter Komplexe lassen sich durch die folgenden Formeln darstellen:
[Cu(PPh₃)₃X], [Cu₂X₂(PPh₃)₃], [Cu(PPh₃)X]₄ sowie [Cu(PPh₃)₂X], wobei X ausgewählt ist aus Cl, Br, I, CN, SCN oder 2-Mercaptobenzimidazol, wobei Cu-(I)-(PPh₃)₂I besonders bevorzugt sind.

Erfindungsgemäß einsetzbare Komplexe können aber auch zusätzlich noch weitere Komplexliganden enthalten. Beispiele davon sind Bipyridyl (z.B. CuX(PPh₃) (bipy), wobei X Cl, Br oder I ist), Bichinolin (z.B. CuX(PPh₃) (biquin), wobei X Cl, Br oder I ist) sowie 1,10-Phenanthrolin, o-Phenylenbis(dimenthylarsin), 1,2-Bis(diphenylphosphino)ethan und Terpyridyl.

Weitere bevorzugte Verbindungen aus Cu und Ag der Oxidationsstufe I sind die Oxide Cu₂O, Ag₂O, Thiocyanate CuSCN, AgSCN, Halogenide CuCl, AgCl, CuBr, AgBr, wobei Cul, Agl, CuSCN und/oder CuCl bevorzugt sind.

Als Carbonsäuresalze, insbesondere mit 1 bis 6 C-Atomen, des einwertigen Kupfers oder Silbers kommen vorzugsweise Acetate, Oxalate, Stearate, Propionate, Butyrate, Benzoate, in Frage, wobei Acetate und/oder Oxalate bevorzugt sind.

Insbesondere bevorzugt liegt die Komponente C) in Mischung mit einem Alkalihalogenid, vorzugsweise Kl, vor, wobei das Mischungsverhältnis 1:10 bis 1:1 beträgt.

Ganz besonders bevorzugte Cu-Verbindungen C) sind neben den Oxiden, Cul, insbesondere in Mischung mit Kl im Verhältnis 1:4, Bis-Triphenylphosphin-Kupferiodid, insbesondere in Mischung mit KI im Verhältnis 1:2.

Ganz besonders bevorzugte Ag-Verbindungen C) sind weiterhin Ag₂O und/oder AgCl.

Als Komponente D) enthalten die Formmassen in Mengen 0 bis 40, bevorzugt 1 bis 30, insbesondere 2 bis 20 Gew.-% kautschukelastische Polymerisate (oft auch als Schlagzähmodifier, Elastomere oder Kautschuke bezeichnet).

Ganz allgemein handelt es sich dabei um Copolymerisate die bevorzugt aus mindestens zwei der folgenden Monomeren aufgebaut sind: Ethylen, Propylen, Butadien, Isobuten, Isopren, Chloropren, Vinylacetat, Styrol, Acrylnitril und Acryl- bzw. Methacrylsäureester mit 1 bis 18 C-Atomen in der Alkoholkomponente.

Derartige Polymere werden z.B. in Houben-Weyl, Methoden der organischen Chemie, Bd. 14/1 (Georg-Thieme-Verlag, Stuttgart, 1961). Seiten 392 bis 406 und in der Monographie von C.B. Bucknall, "Toughened Plastics" (Applied Science Publishers, London, 1977) beschrieben.

Im Folgenden werden einige bevorzugte Arten solcher Elastomerer vorgestellt.

Bevorzugte Arten von solchen Elastomeren sind die sog. Ethylen-Propylen (EPM) bzw. Ethylen-Propylen-Dien-(EPDM)-Kautschuke.

EPM-Kautschuke haben im Allgemeinen praktisch keine Doppelbindungen mehr, während EPDM-Kautschuke 1 bis 20 Doppelbindungen/100 C-Atome aufweisen können.

Als Dien-Monomere für EPDM-Kautschuke seien beispielsweise konjugierte Diene wie Isopren und Butadien, nicht-konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopen-tadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyl-tricyclo(5.2.1.0.2.6)-3,8-decadien oder deren Mischungen genannt. Bevorzugt werden Hexa-1,5-dien, 5-Ethylidennorbornen und Dicyclopentadien. Der Diengehalt der EPDM-Kautschuke beträgt vorzugsweise 0,5 bis 50, insbesondere 1 bis 8 Gew.-%, bezogen auf das Gesamtgewicht des Kautschuks.

EPM- bzw. EPDM-Kautschuke können vorzugsweise auch mit reaktiven Carbonsäuren oder deren Derivaten gepfropft sein. Hier seien z.B. Acrylsäure, Methacrylsäure und deren Derivate, z.B. Glycidyl(meth)acrylat, sowie Maleinsäureanhydrid genannt.

Eine weitere Gruppe bevorzugter Kautschuke sind Copolymere des Ethylens mit Acrylsäure und/oder Methacrylsäure und/oder den Estern dieser Säuren. Zusätzlich können die Kautschuke noch Dicarbonsäuren wie Maleinsäure und Fumarsäure oder Derivate dieser Säuren, z.B. Ester und Anhydride, und/oder Epoxy-Gruppen enthaltende Monomere enthalten. Diese Dicarbonsäurederivate bzw. Epoxygruppen enthaltende Monomere werden vorzugsweise durch Zugabe von Dicarbonsäure- bzw. Epoxygruppen enthaltenden Monomeren der allgemeinen Formeln I oder II oder III oder IV zum Monomerengemisch in den Kautschuk eingebaut

R¹C(COOR²)=C(COOR³)R⁴ (I)

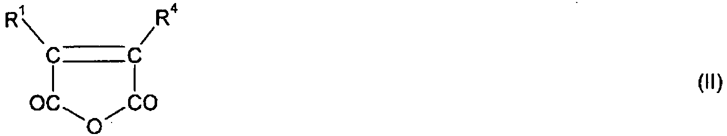

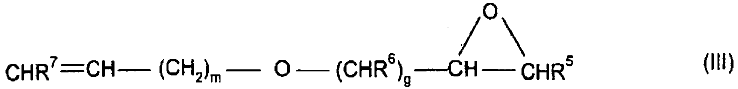

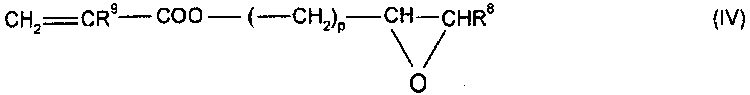

wobei R¹ bis R⁹ Wasserstoff oder Alkylgruppen mit 1 bis 6 C-Atomen darstellen und m eine ganze Zahl von 0 bis 20, g eine ganze Zahl von 0 bis 10 und p eine ganze Zahl von 0 bis 5 ist. Vorzugsweise bedeuten die Reste R¹ bis R⁹ Wasserstoff, wobei m für 0 oder 1 und g für 1 steht. Die entsprechenden Verbindungen sind Maleinsäure, Fumarsäure, Maleinsäureanhydrid, Allylglycidylether und Vinylglycidylether.

Bevorzugte Verbindungen der Formeln I, II und IV sind Maleinsäure, Maleinsäureanhydrid und Epoxygruppen-enthaltende Ester der Acrylsäure und/oder Methacrylsäure, wie Glycidylacrylat, Glycidylmethacrylat und die Ester mit tertiären Alkoholen, wie t-Butylacrylat. Letztere weisen zwar keine freien Carboxylgruppen auf, kommen in ihrem Verhalten aber den freien Säuren nahe und werden deshalb als Monomere mit latenten Carboxylgruppen bezeichnet.
Vorteilhaft bestehen die Copolymeren aus 50 bis 98 Gew.-% Ethylen, 0,1 bis 20 Gew.-% Epoxygruppen enthaltenden Monomeren und/oder Methacrylsäure und/oder Säureanhydridgruppen enthaltenden Monomeren sowie der restlichen Menge an (Meth)acrylsäureestern.

### Besonders bevorzugt sind Copolymerisate aus

| | |
|---|---|
| 50 bis 98, | insbesondere 55 bis 95 Gew.-% Ethylen, |
| 0,1 bis 40, | insbesondere 0,3 bis 20 Gew.-% Glycidylacrylat und/oder Glycidyl-methacrylat, (Meth)acrylsäure und/oder Maleinsäureanhydrid, und |
| 1 bis 45, | insbesondere 5 bis 40 Gew.-% n-Butylacrylat und/oder 2-Ethylhexylacrylat. |

Weitere bevorzugte Ester der Acryl- und/oder Methacrylsäure sind die Methyl-, Ethyl-, Propyl- und i- bzw. t-Butylester.

Daneben können auch Vinylester und Vinylether als Comonomere eingesetzt werden.

Die vorstehend beschriebenen Ethylencopolymeren können nach an sich bekannten Verfahren hergestellt werden, vorzugsweise durch statistische Copolymerisation unter hohem Druck und erhöhter Temperatur. Entsprechende Verfahren sind allgemein bekannt.

Bevorzugte Elastomere sind auch Emulsionspolymerisate, deren Herstellung z.B. bei Blackley in der Monographie "Emulsion Polymerization" beschrieben wird. Die verwendbaren Emulgatoren und Katalysatoren sind an sich bekannt.

Grundsätzlich können homogen aufgebaute Elastomere oder aber solche mit einem Schalenaufbau eingesetzt werden. Der schalenartige Aufbau wird durch die Zugabereihenfolge der einzelnen Monomeren bestimmt; auch die Morphologie der Polymeren wird von dieser Zugabereihenfolge beeinflusst.

Nur stellvertretend seien hier als Monomere für die Herstellung des Kautschukteils der Elastomeren Acrylate wie z.B. n-Butylacrylat und 2-Ethylhexylacrylat, entsprechende Methacrylate, Butadien und Isopren sowie deren Mischungen genannt. Diese Monomeren können mit weiteren Monomeren wie z.B. Styrol, Acrylnitril, Vinylethern und weiteren Acrylaten oder Methacrylaten wie Methylmethacrylat, Methylacrylat, Ethylacrylat und Propylacrylat copolymerisiert werden.

Die Weich- oder Kautschukphase (mit einer Glasübergangstemperatur von unter 0°C) der Elastomeren kann den Kern, die äußere Hülle oder eine mittlere Schale (bei Elastomeren mit mehr als zweischaligem Aufbau) darstellen; bei mehrschaligen Elastomeren können auch mehrere Schalen aus einer Kautschukphase bestehen.
Sind neben der Kautschukphase noch eine oder mehrere Hartkomponenten (mit Glasübergangstemperaturen von mehr als 20°C) am Aufbau des Elastomeren beteiligt, so werden diese im allgemeinen durch Polymerisation von Styrol, Acrylnitril, Methacrylnitril, α-Methylstyrol, p-Methylstyrol, Acrylsäureestern und Methacrylsäureestern wie Methylacrylat, Ethylacrylat und Methylmethacrylat als Hauptmonomeren hergestellt. Daneben können auch hier geringere Anteile an weiteren Comonomeren eingesetzt werden.

In einigen Fällen hat es sich als vorteilhaft herausgestellt, Emulsionspolymerisate einzusetzen, die an der Oberfläche reaktive Gruppen aufweisen. Derartige Gruppen sind z.B. Epoxy-, Carboxyl-, latente Carboxyl-, Amino- oder Amidgruppen sowie funktionelle Gruppen, die durch Mitverwendung von Monomeren der allgemeinen Formel 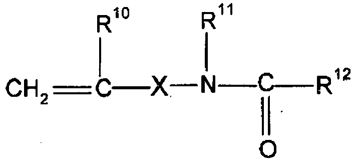 eingeführt werden können,
wobei die Substituenten folgende Bedeutung haben können:
- R¹⁰: Wasserstoff oder eine C₁- bis C₄-Alkylgruppe,
- R¹¹: Wasserstoff, eine C₁- bis C₈-Alkylgruppe oder eine Arylgruppe, insbesondere Phenyl,
- R¹²: Wasserstoff, eine C₁- bis C₁₀-Alkyl-, eine C₆- bis C₁₂-Arylgruppe oder -OR¹³
- R¹³: eine C₁- bis C₈-Alkyl- oder C₆- bis C₁₂-Arylgruppe, die gegebenenfalls mit O- oder N-haltigen Gruppen substituiert sein können,
- X: eine chemische Bindung, eine C₁- bis C₁₀-Alkylen- oder C₆-C₁₂-Arylengruppe oder

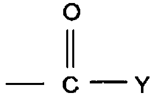

- Y: O-Z oder NH-Z und
- Z: eine C₁- bis C₁₀-Alkylen- oder C₆- bis C₁₂-Arylengruppe.

Auch die in der EP-A 208 187 beschriebenen Pfropfmonomeren sind zur Einführung reaktiver Gruppen an der Oberfläche geeignet.
Als weitere Beispiele seien noch Acrylamid, Methacrylamid und substituierte Ester der Acrylsäure oder Methacrylsäure wie (N-t-Butylamino)-ethylmethacrylat, (N,N-Dimethylamino)ethylacrylat, (N,N-Dimethylamino)-methylacrylat und (N,N-Diethylamino)ethylacrylat genannt.

Weiterhin können die Teilchen der Kautschukphase auch vernetzt sein. Als Vernetzer wirkende Monomere sind beispielsweise Buta-1,3-dien, Divinylbenzol, Diallylphthalat und Dihydrodicyclopentadienylacrylat sowie die in der EP-A 50 265 beschriebenen Verbindungen.

Ferner können auch sogenannte pfropfvernetzende Monomere (graft-linking monomers) verwendet werden, d.h. Monomere mit zwei oder mehr polymerisierbaren Doppelbindungen, die bei der Polymerisation mit unterschiedlichen Geschwindigkeiten reagieren. Vorzugsweise werden solche Verbindungen verwendet, in denen mindestens eine reaktive Gruppe mit etwa gleicher Geschwindigkeit wie die übrigen Monomeren polymerisiert, während die andere reaktive Gruppe (oder reaktive Gruppen) z.B. deutlich langsamer polymerisiert (polymerisieren). Die unterschiedlichen Polymerisationsgeschwindigkeiten bringen einen bestimmten Anteil an ungesättigten Doppelbindungen im Kautschuk mit sich. Wird anschließend auf einen solchen Kautschuk eine weitere Phase aufgepfropft, so reagieren die im Kautschuk vorhandenen Doppelbindungen zumindest teilweise mit den Pfropfmonomeren unter Ausbildung von chemischen Bindungen, d.h. die aufgepfropfte Phase ist zumindest teilweise über chemische Bindungen mit der Pfropfgrundlage verknüpft.

Beispiele für solche pfropfvernetzende Monomere sind Allylgruppen enthaltende Monomere, insbesondere Allylester von ethylenisch ungesättigten Carbonsäuren wie Allyl-acrylat, Allylmethacrylat, Diallylmaleat, Diallylfumarat, Diallylitaconat oder die entsprechenden Monoallylverbindungen dieser Dicarbonsäuren. Daneben gibt es eine Vielzahl weiterer geeigneter pfropfvernetzender Monomerer; für nähere Einzelheiten sei hier beispielsweise auf die US-PS 4 148 846 verwiesen.

Im Allgemeinen beträgt der Anteil dieser vernetzenden Monomeren an dem schlagzäh modifizierenden Polymer bis zu 5 Gew.-%, vorzugsweise nicht mehr als 3 Gew.-%, bezogen auf das schlagzäh modifizierende Polymere.

Nachfolgend seien einige bevorzugte Emulsionspolymerisate aufgeführt. Zunächst sind hier Pfropfpolymerisate mit einem Kern und mindestens einer äußeren Schale zu nennen, die folgenden Aufbau haben:

| Typ | Monomere für den Kern | Monomere für die Hülle |
|---|---|---|
| I | Buta-1,3-dien, Isopren, n-Butylacrylat, Ethylhexylacrylat oder deren Mischungen | Styrol, Acrylnitril, Methylmethacrylat |
| II | wie I aber unter Mitverwendung von Vernetzern | wie I |
| III | wie I oder II | n-Butylacrylat, Ethylacrylat, Methylacrylat, Buta-1,3-dien, Isopren, Ethylhexyl-acrylat |
| IV | wie I oder II | wie I oder III aber unter Mitverwendung von Monomeren mit reaktiven Gruppen wie hierin beschrieben |
| V | Styrol, Acrylnitril, Methylmethacrylat oder deren Mischungen | erste Hülle aus Monomeren wie unter I und II für den Kern beschrieben zweite Hülle wie unter I oder IV für die Hülle beschrieben |

Anstelle von Pfropfpolymerisaten mit einem mehrschaligen Aufbau können auch homogene, d.h. einschalige Elastomere aus Buta-1,3-dien, Isopren und n-Butylacrylat oder deren Copolymeren eingesetzt werden. Auch diese Produkte können durch Mitverwendung von vernetzenden Monomeren oder Monomeren mit reaktiven Gruppen hergestellt werden.

Beispiele für bevorzugte Emulsionspolymerisate sind n-Butylacrylat/(Meth)acrylsäure-Copolymere, n-Butylacrylat/Glycidylacrylat- oder n-Butylacrylat/Glycidylmethacrylat-Copolymere, Pfropfpolymerisate mit einem inneren Kern aus n-Butylacrylat oder auf Butadienbasis und einer äußeren Hülle aus den vorstehend genannten Copolymere und Copolymere von Ethylen mit Comonomeren, die reaktive Gruppen liefern.

Die beschriebenen Elastomere können auch nach anderen üblichen Verfahren, z.B. durch Suspensionspolymerisation, hergestellt werden.

Siliconkautschuke, wie in der DE-A 37 25 576, der EP-A 235 690, der DE-A 38 00 603 und der EP-A 319 290 beschrieben, sind ebenfalls bevorzugt.

Besonders bevorzugte Kautschuke D) sind Ethylencopolymere, wie vorstehend beschrieben, welche funktionelle Monomere enthalten, wobei die funktionellen Monomeren ausgewählt sind aus der Gruppe der Carbonsäure-, Carbonsäureanhydrid-, Carbonsäureester-, Carbonsäureamid-, Carbonsäureimid-, Amino-, Hydroxyl-, Epoxid-, Urethan- oder Oxazolingruppen oder deren Mischungen.

Der Anteil der funktionellen Gruppen beträgt 0,1 bis 20, vorzugsweise 0,2 bis 10 und insbesondere 0,3 bis 7 Gew.-%, bezogen auf 100 Gew.-% D).

Besonders bevorzugte Monomere sind aus einer ethylenisch ungesättigten Mono- oder Dicarbonsäure oder einem funktionellen Derivat einer solchen Säure aufgebaut.

Grundsätzlich eignen sich alle primären, sekundären und tertiären C₁-C₁₆-Alkylester der Acrylsäure oder Methacrylsäure, doch werden Ester mit 1 - 12 C-Atomen, insbesondere mit 2 - 10 C-Atomen bevorzugt.

Beispiele hierfür sind Methyl-, Ethyl-, Propyl-, n-, i-Butyl- und t-Butyl-, 2-Ethylhexyl-, Octyl- und Decylacrylate bzw. die entsprechenden Ester der Methacrylsäure. Von diesen werden n-Butylacrylat und 2-Ethylhexylacrylat besonders bevorzugt.

Anstelle der Ester oder zusätzlich zu diesen können in den Olefinpolymerisaten auch säurefunktionelle und/oder latent säurefunktionelle Monomere ethylenisch ungesättigter Mono- oder Dicarbonsäuren oder Epoxygruppen aufweisende Monomere enthalten sein.

Als weitere Beispiele für Monomere seien Acrylsäure, Methacrylsäure, tertiäre Alkylester dieser Säuren, insbesondere tert.-Butylacrylat und Dicarbonsäuren wie Maleinsäure und Fumarsäure oder Derivate dieser Säuren sowie deren Monoester genannt.

Als latent säurefunktionelle Monomere sollen solche Verbindungen verstanden werden, die unter den Polymerisationsbedingungen bzw. bei der Einarbeitung der Olefinpolymerisate in die Formmassen freie Säuregruppen bilden. Als Beispiele hierfür seien Anhydride von Dicarbonsäuren mit bis zu 20 C-Atomen, insbesondere Maleinsäureanhydrid und tertiäre C₁-C₁₂-Alkylester der vorstehend genannten Säuren, insbesondere tert.-Butylacrylat und tert.-Butylmethacrylat angeführt.

Die säurefunktionellen bzw. latent säurefunktionellen Monomeren und die Epoxygruppenenthaltenden Monomeren werden vorzugsweise durch Zugabe von Verbindungen der allgemeinen Formeln I - IV zum Monomerengemisch in die Olefinpolymerisate eingebaut.

Der Schmelzindex der Ethylencopolymeren liegt im allgemeinen im Bereich von 1 bis 80 g/10 min (gemessen bei 190°C und 2,16 kg Belastung).

Das Molekulargewicht dieser Ethylen-α-Olefin-Copolymere liegt zwischen 10.000 und 500.000 g/mol, bevorzugt zwischen 15.000 und 400.000 g/mol (Mn, bestimmt mittels GPC in 1,2,4-Trichlorbenzol mit PS-Eichung).

In einer besonderen Ausführungsform werden mittels sog. "single site catalysts" hergestellte Ethylen-α-Olefin-Copolymere eingesetzt. Weitere Einzelheiten können der US 5,272,236 entnommen werden. In diesem Fall weisen die Ethylen-α-Olefin-Copolymere eine für Polyolefine enge Molekulargewichtsverteilung kleiner 4, vorzugsweise kleiner 3,5 auf.

Bevorzugt eingesetzte Handelsprodukte B sind Exxelor^{®} VA 1801 oder 1803, Kraton^{®} G 1901 FX oder Fusabond^{®} N NM493 D oder Fusabond^{®} A560 der Firmen Exxon, Kraton und DuPont sowie Tafmer^{®}MH 7010 der Firma Mitsui.

Selbstverständlich können auch Mischungen der vorstehend aufgeführten Kautschuktypen eingesetzt werden.

Als Komponente E) können die erfindungsgemäßen Formmassen bis zu 60, vorzugsweise bis zu 50 Gew.-% weiterer Zusatzstoffe enthalten.

Als faser- oder teilchenförmige Füllstoffe E) seien Kohlenstofffasern, Glasfasern, Glaskugeln, amorphe Kieselsäure, Calciumsilicat, Calciummetasilicat, Magnesiumcarbonat, Kaolin, Kreide, gepulverter Quarz, Glimmer, Bariumsulfat und Feldspat genannt, die in Mengen von 1 bis 50 Gew.-%, insbesondere 5 bis 40, vorzugsweise 10 bis 40 Gew.-% eingesetzt werden.

Als bevorzugte faserförmige Füllstoffe seien Kohlenstofffasem, Aramid-Fasern und Kaliumtitanat-Fasern genannt, wobei Glasfasern als E-Glas besonders bevorzugt sind. Diese können als Rovings oder Schnittglas in den handelsüblichen Formen eingesetzt werden.

Die faserförmigen Füllstoffe können zur besseren Verträglichkeit mit den Thermoplasten mit einer Silanverbindung oberflächlich vorbehandelt sein.

Geeignete Silanverbindungen sind solche der allgemeinen Formel

(X-(CH₂)ₙ)ₖ-Si-(O-CₘH₂ₘ₊₁)₄₋ₖ

in der die Substituenten folgende Bedeutung haben: 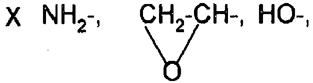
- n: eine ganze Zahl von 2 bis 10, bevorzugt 3 bis 4
- m: eine ganze Zahl von 1 bis 5, bevorzugt 1 bis 2
- k: eine ganze Zahl von 1 bis 3, bevorzugt 1

Bevorzugte Silanverbindungen sind Aminopropyltrimethoxysilan, Aminobutyltrimeth-oxysilan, Aminopropyltriethoxysilan, Aminobutyltriethoxysilan sowie die entsprechenden Silane, welche als Substituent X eine Glycidylgruppe enthalten.

Die Silanverbindungen werden im Allgemeinen in Mengen von 0,01 bis 2, vorzugsweise 0,025 bis 1,0 und insbesondere 0,05 bis 0,5 Gew.-% (bezogen auf E)) zur Oberflächenbeschichtung eingesetzt.

Geeignet sind auch nadelförmige mineralische Füllstoffe.

Unter nadelförmigen mineralischen Füllstoffen wird im Sinne der Erfindung ein mineralischer Füllstoff mit stark ausgeprägtem nadelförmigen Charakter verstanden. Als Beispiel sei nadelförmiger Wollastonit genannt. Vorzugsweise weist das Mineral ein L/D-(Länge Durchmesser)-Verhältnis von 8 : 1 bis 35 : 1, bevorzugt von 8 : 1 bis 11 : 1 auf. Der mineralische Füllstoff kann gegebenenfalls mit den vorstehend genannten Silanverbindungen vorbehandelt sein; die Vorbehandlung ist jedoch nicht unbedingt erforderlich.

Als weitere Füllstoffe seien Kaolin, calciniertes Kaolin, Wollastonit, Talkum und Kreide genannt sowie zusätzlich plättchen- oder nadelförmige Nanofüllstoffe bevorzugt in Mengen zwischen 0,1 und 10 %. Bevorzugt werden hierfür Böhmit, Bentonit, Montmorillonit, Vermicullit, Hektorit und Laponit eingesetzt. Um eine gute Verträglichkeit der plättchenförmigen Nanofüllstoffe mit dem organischen Bindemittel zu erhalten, werden die plättchenförmigen Nanofüllstoffe nach dem Stand der Technik organisch modifiziert. Der Zusatz der plättchen- oder nadelförmigen Nanofüllstoffe zu den erfindungsgemäßen Nanokompositen führt zu einer weiteren Steigerung der mechanischen Festigkeit.

Als Komponente E) können die erfindungsgemäßen Formmassen 0,05 bis 3, vorzugsweise 0,1 bis 1,5 und insbesondere 0,1 bis 1 Gew.-% eines Schmiermittels enthalten.

Bevorzugt sind Al-, Alkali-, Erdalkalisalze oder Ester- oder Amide von Fettsäuren mit 10 bis 44 C-Atomen, vorzugsweise mit 12 bis 44 C-Atomen.

Die Metallionen sind vorzugsweise Erdalkali und Al, wobei Ca oder Mg besonders bevorzugt sind.

Bevorzugte Metallsalze sind Ca-Stearat und Ca-Montanat sowie Al-Stearat.

Es können auch Mischungen verschiedener Salze eingesetzt werden, wobei das Mischungsverhältnis beliebig ist.

Die Carbonsäuren können 1- oder 2-wertig sein. Als Beispiele seien Pelargonsäure, Palmitinsäure, Laurinsäure, Margarinsäure, Dodecandisäure, Behensäure und besonders bevorzugt

Stearinsäure, Caprinsäure sowie Montansäure (Mischung von Fettsäuren mit 30 bis 40 C-Atomen) genannt.

Die aliphatischen Alkohole können 1- bis 4-wertig sein. Beispiele für Alkohole sind n-Butanol, n-Octanol, Stearylalkohol, Ethylenglykol, Propylenglykol, Neopentylglykol, Pentaerythrit, wobei Glycerin und Pentaerythrit bevorzugt sind.

Die aliphatischen Amine können 1- bis 3-wertig sein. Beispiele hierfür sind Stearylamin, Ethylendiamin, Propylendiamin, Hexamethylendiamin, Di(6-Aminohexyl)amin, wobei Ethylendiamin und Hexamethylendiamin besonders bevorzugt sind. Bevorzugte Ester oder Amide sind entsprechend Glycerindistearat, Glycerintristearat, Ethylendiamindistearat, Glycerinmonopalmitat, Glycerintrilaurat, Glycerinmonobehenat und Penta-erythrittetrastearat.

Es können auch Mischungen verschiedener Ester oder Amide oder Ester mit Amiden in Kombination eingesetzt werden, wobei das Mischungsverhältnis beliebig ist.

Als Komponente E) können die erfindungsgemäßen Formmassen sogenannte Säurefänger für den roten Phophor enthalten in Mengen von 0,01 bis 2, vorzugsweise von 0,1 bis 1,5 Gew.%.

Geeignete Säurefänger sind ZnO, Zn-borat, Zn-stannat, MgO, Mg(OH)₂, ZnCO₃, MgCO₃, CaCO₃, Mg Ca Carbonate, AIOOH, wobei ZnO, basisches ZnCO₃, Mg(OH)₂, CaCO₃ besonders bevorzugt sind.

Als sterisch gehinderte Phenole E) eignen sich prinzipiell alle Verbindungen mit phenolischer Struktur, die am phenolischen Ring mindestens eine sterisch anspruchsvolle Gruppe aufweisen.

Vorzugsweise kommen z.B. Verbindungen der Formel 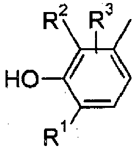 in Betracht, in der bedeuten:
R¹ und R² eine Alkylgruppe, eine substituierte Alkylgruppe oder eine substituierte Triazolgruppe, wobei die Reste R¹ und R² gleich oder verschieden sein können und R³ eine Alkylgruppe, eine substituierte Alkylgruppe, eine Alkoxigruppe oder eine substituierte Aminogruppe.

Antioxidantien der genannten Art werden beispielsweise in der DE-A 27 02 661 (US- 4 360 617) beschrieben.

Eine weitere Gruppe bevorzugter sterisch gehinderter Phenole leiten sich von substituierten Benzolcarbonsäuren ab, insbesondere von substituierten Benzolpropionsäuren.

Besonders bevorzugte Verbindungen aus dieser Klasse sind Verbindungen der Formel 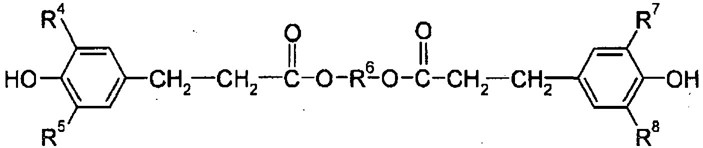 wobei R⁴, R⁵, R⁷ und R⁸ unabhängig voneinander C₁-C₈-Alkylgruppen darstellen, die ihrerseits substituiert sein können (mindestens eine davon ist eine sterisch anspruchsvolle Gruppe) und R⁶ einen zweiwertigen aliphatischen Rest mit 1 bis 10 C-Atomen bedeutet, der in der Hauptkette auch C-O-Bindungen aufweisen kann.

Bevorzugte Verbindungen, die dieser Formel entsprechen, sind

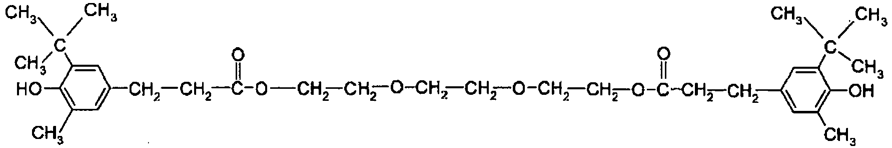

### (Irganox® 245 der Firma BASF SE)

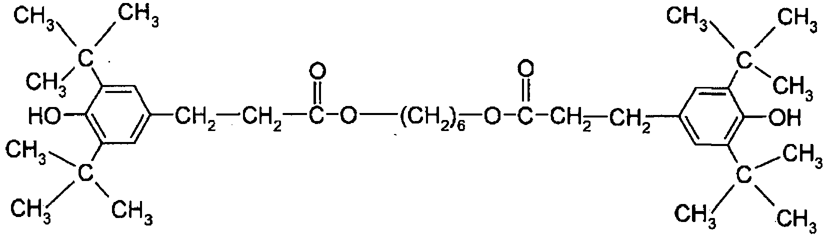

### (Irganox® 259 der Firma BASF SE)

Beispielhaft genannt seien insgesamt als sterisch gehinderte Phenole:
2,2'-Methylen-bis-(4-methyl-6-tert.-butylphenol), 1,6-Hexandiol-bis[3-(3,5-di-tert.-butyl-4-hydroxyphenyl)-propionat], Pentaerythrityl-tetrakis-[3-(3,5-di-tert.-butyl-4-hydroxy-phenyl)-propionat], Distearyl-3,5-di-tert.-butyl-4-hydroxybenzylphosphonat, 2,6,7-Trioxa-1-phosphabicyclo-[2.2.2]oct-4-yl-methyl-3,5-di-tert.-butyl-4-hydroxyhydro-cinnamat, 3,5-Di-tert.-butyl-4-hydroxyphenyl-3,5-distearyl-thiotriazylamin, 2-(2'-Hydroxy-3'-hydroxy-3',5'-di-tert.-butylphenyl)-5-chlorbenzotriazol, 2,6-Di-tert.-butyl-4-hydroxymethylphenol, 1,3,5-Trimethyl-2,4,6-tris-(3,5-di-tert.-butyl-4-hydroxybenzyl)-benzol, 4,4'-Methylen-bis-(2,6-di-tert.-butylphenol), 3,5-Di-tert.-butyl-4-hydroxybenzyl-dimethylamin.

Als besonders wirksam erwiesen haben sich und daher vorzugsweise verwendet werden 2,2'-Methylen-bis-(4-methyl-6-tert.-butylphenol), 1,6-Hexandiol-bis-(3,5-di-tert.-butyl-4-hydroxyphenyl)-propionat (Irganox® 259), Pentaerythrityl-tetrakis-[3-(3,5-di-tert.-butyl-4-hydroxyphenyl)-propionat] sowie N,N'-Hexamethylen-bis-3,5-di-tert.-butyl-4-hydroxyhydrocinnamid (Irganox® 1098) und das vorstehend beschriebene Irganox® 245 der Firma BASF SE, das besonders gut geeignet ist.

Die Antioxidantien E), die einzeln oder als Gemische eingesetzt werden können, sind in einer Menge von 0,05 bis zu 3 Gew.-%, vorzugsweise von 0,1 bis 1,5 Gew.-%, insbesondere 0,1 bis 1 Gew.-%, bezogen auf das Gesamtgewicht der Formmassen A) bis E) enthalten.

In manchen Fällen haben sich sterisch gehinderte Phenole mit nicht mehr als einer sterisch gehinderten Gruppe in ortho-Stellung zur phenolischen Hydroxygruppe als besonders vorteilhaft erwiesen; insbesondere bei der Beurteilung der Farbstabilität bei Lagerung in diffusem Licht über längere Zeiträume.

Als Komponente E) können die erfindungsgemäßen Formmassen 0,05 bis 5, vorzugsweise 0,1 bis 2 und insbesondere 0,25 bis 1,5 Gew.-% eines Nigrosins enthalten.

Unter Nigrosinen versteht man im allgemeinen eine Gruppe von schwarzen oder grauen, mit den Indulinen verwandten Phenazin-Farbstoffen (Azin-Farbstoffen) in verschiedenen Ausführungsformen (wasserlöslich, fettlöslich, spritlöslich), die bei Wollfärberei und -druck, beim Schwarzfärben von Seiden, zum Färben von Leder, Schuhcremes, Firnissen, Kunststoffen, Einbrennlacken, Tinten und dergleichen, sowie als Mikroskopiefarbstoffe Verwendung finden.

Man gewinnt die Nigrosine technisch durch Erhitzen von Nitrobenzol, Anilin und salzsaurem Anilin mit Metall. Eisen und FeCl₃ (Name von lateinischem niger = schwarz).

Die Komponente E) kann als freie Base oder auch als Salz (z.B. Hydrochlorid) eingesetzt werden.

Weitere Einzelheiten zu Nigrosinen sind beispielsweise dem elektronischen Lexikon Römpp Online, Version 2.8, Thieme-Verlag Stuttgart, 2006, Stichwort "Nigrosin" zu entnehmen.

Als Komponente E) können die erfindungsgemäßen Formmassen 0 bis 20, vorzugsweise 1 bis 15 und insbesondere 5 bis 15 Gew.-% eines stickstoffhaltigen Flammschutzmittels, vorzugsweise einer Melaminverbindung enthalten.

Geeignete Verbindungen (oft auch als Salze oder Addukte bezeichnet) sind Melaminsulfat, Melamin, Melaminborat, -oxalat, -phosphat prim., -phosphat sec. und -pyrophosphat sec., Neopentylglycolborsäuremelamin sowie polymeres Melaminphosphat (CAS-Nr 56386-64-2 bzw. 218768-84-4).
Bevorzugt sind Melaminpolyphosphatsalze einer 1,3,5-Triazinverbindung, deren Zahl n des durchschnittlichen Kondensationsgrades zwischen 20 und 200 liegt und der 1,3,5-Triazingehalt 1,1 bis 2,0 mol einer 1,3,5-Triazinverbindung, ausgewählt aus der Gruppe, bestehend aus Melamin, Melam, Melem, Melon, Ammelin, Ammelid, 2-Ureidomelamin, Acetoguanamin, Benzoguanamin und Diaminophenyltriazin, pro Mol Phosphoratom beträgt. Bevorzugt beträgt der n-Wert solcher Salze im allgemeinen zwischen 40 und 150 und das Verhältnis einer 1,3,5-Triazinverbindung pro Mol Phosphoratom vorzugsweise zwischen 1,2 und 1,8. Des weiteren wird der pH einer 10 gew.-%igen wässrigen Aufschlämmung von Salzen, hergestellt gemäß EP-B1095030 im allgemeinen mehr als 4,5 und vorzugsweise mindestens 5,0, betragen. Der pH-Wert wird üblicherweise bestimmt, indem 25 g des Salzes und 225 g sauberes Wasser von 25°C in einen 300-ml-Becher gegeben werden, die resultierende wäßrige Aufschlammung für 30 Minuten gerührt und dann der pH gemessen wird. Der o.g. n-Wert, der zahlenmittlere Kondensationsgrad, kann mittels 31P-Feststoff-NMR bestimmt werden. Aus J. R. van Wazer, C. F. Callis, J. Shoolery und R. Jones, J. Am. Chem. Soc., 78, 5715, 1956, ist bekannt, dass die Anzahl benachbarter Phosphatgruppen eine einzigartige, chemische Verschiebung angibt, die die klare Unterscheidung zwischen Orthophosphaten, Pyrophosphaten und Polyphosphaten ermöglicht. In EP1095030B1 is außerdem ein Verfahren zur Herstellung des gewünschten Polyphosphatsalzes einer 1,3,5-Triazinverbindung, die einen n-Wert von 20 bis 200 aufweist und deren 1,3,5- Triazingehalt 1,1 bis 2,0 mol einer 1,3,5- Triazinverbindung betragt, beschrieben.

Dieses Verfahren umfaßt die Umwandlung einer 1,3,5-Triazinverbindung mit Orthophosphorsaure in ihr Orthophosphatsalz, gefolgt von Dehydratisierung und Warmebehandlung, um das Orthophosphatsalz in ein Polyphosphat der 1,3,5-Triazinverbindung umzuwandeln. Diese Wärmebehandlung wird vorzugsweise bei einer Temperatur von mindestens 300°C, und vorzugsweise bei mindestens 310°C, durchgeführt. Zusätzlich zu Orthophosphaten von 1,3,5-Triazinverbindungen können ebenso andere 1,3,5-Triazinphosphate verwendet werden, einschließlich beispielsweise ein Gemisch aus Orthophosphaten und Pyrophosphaten.

Bevorzugt handelt es sich um Aluminiumphosphit [Al(H₂PO₃)₃], sekundäres Aluminiumphosphit [Al₂(HPO₃)₃], basisches Aluminiumphosphit [Al(OH)(H₂PO₃)₂*2aq], Aluminiumphosphittetrahydrat [Al₂(HPO₃)₃*4aq], Aluminiumphosphonat, Al₇(HPO₃)₉(OH)₆(1,6-Hexandiamin)_{1,5}*12H₂O, Al₂(HPO₃)³*xAl₂O₃*nH₂O mit x = 2,27 - 1 und/oder Al₄H₆P₁₆O₁₈ (siehe WO2012/45414).

Weitere geeignete Stickstoff enthaltende Flammschutzmittel sind dem Fachmann bekannt.

Als Komponente E) können die erfindungsgemäßen thermoplastischen Formmassen übliche Verarbeitungshilfsmittel wie Stabilisatoren, Oxidationsverzögerer, Mittel gegen Wärmezersetzung und Zersetzung durch ultraviolettes Licht, Gleit- und Entformungsmittel, Färbemittel wie Farbstoffe und Pigmente, Keimbildungsmittel, Weichmacher, usw. enthalten.

Als Beispiele für Oxidationsverzögerer und Wärmestabilisatoren sind sterisch gehinderte Phenole und/oder Phosphite und Amine (z.B. TAD), Hydrochinone, aromatische sekundäre Amine wie Diphenylamine, verschiedene substituierte Vertreter dieser Gruppen und deren Mischungen in Konzentrationen bis zu 1 Gew.-%, bezogen auf das Gewicht der thermoplastischen Formmassen genannt.

Als UV-Stabilisatoren, die im Allgemeinen in Mengen bis zu 2 Gew.-%, bezogen auf die Formmasse, verwendet werden, seien verschiedene substituierte Resorcine, Salicylate, Benzotriazole und Benzophenone genannt.

Es können anorganische Pigmente, wie Titandioxid, Ultramarinblau, Eisenoxid und Ruß, weiterhin organische Pigmente, wie Phthalocyanine, Chinacridone, Perylene sowie Farbstoffe, wie Anthrachinone als Farbmittel zugesetzt werden.

Als Keimbildungsmittel können Natriumphenylphosphinat, Aluminiumoxid, Siliziumdioxid sowie bevorzugt Talkum eingesetzt werden.

Die erfindungsgemäßen thermoplastischen Formmassen können nach an sich bekannten Verfahren hergestellt werden, indem man die Ausgangskomponenten in üblichen Mischvorrichtungen wie Schneckenextrudern, Brabender-Mühlen oder Banbury-Mühlen mischt und anschließend extrudiert. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden. Die Mischtemperaturen liegen in der Regel bei 230 bis 320°C.

Nach einer weiteren bevorzugten Arbeitsweise können die Komponenten B) und C) sowie gegebenenfalls D) und E) mit einem Präpolymeren gemischt, konfektioniert und granuliert werden. Das erhaltene Granulat wird in fester Phase anschließend unter Inertgas kontinuierlich oder diskontinuierlich bei einer Temperatur unterhalb des Schmelzpunktes der Komponente A) bis zur gewünschten Viskosität kondensiert.

Die erfindungsgemäßen thermoplastischen Formmassen zeichnen sich durch eine gute Flammwidrigkeit und eine hervorragende Phosphorstabilität und UV-Stabilität aus.

Die erfindungsgemäßen Formmassen weisen einen stark verringerten rötlichen Farbton auf, die Verwendung der Komponente C) in Verbindung mit rotem Phosphor führt zu einer grauen Eigenfarbe des Compounds und der daraus erhältlichen Formkörper. Diese sind daher auch für Anwendungen geeignet, in denen eine helle Eigenfarbe oder Einfärbung (weiß, grau) erforderlich ist.

Die erfindungsgemäße Verwendung von Cu- und/oder Ag-Verbindungen gemäß Anspruch 1 führt zur Herstellung von Formmassen gemäß Anspruch 1 oder Formkörpem gemäß Anspruch 10 mit mindestens 15 % niedrigeren Δ L Farbwerten im Vergleich zu PA Formmassen ohne Komponente C) gemäß Anspruch 1 (gemäß DIN 53236 und ISO 7724-3, CieLab Verfahren), sowie zu 35 % niedrigeren Δ a Farbwerten und mindestens 35 % niedrigeren Δ b Farbwerten.

Die Phosphorausscheidungswerte (28 Tage/70 °C) betragen unter 200 µg P/Probekörper, vorzugsweise unter 160 µg P/Probekörper.

Diese eignen sich daher zur Herstellung von Fasern, Folien und Formkörpern jeglicher Art. Nachfolgend sind einige Beispiele genannt: Steckverbinder, Stecker, Steckerteile, Kabelbaumkomponenten, Schaltungsträger, Schaltungsträgerkomponenten, dreidimensional spritzgegossene Schaltungsträger, elektrische Verbindungselemente und mechatronische Komponenten.

Die erfindungsgemäß aus den thermoplastischen Formmassen herzustellenden Formteile oder Halbzeuge können beispielsweise in der Kraftfahrzeug-, Elektro-, Elektronik-, Telekommunikations-, Informations-technologie-, Unterhaltungs-, Computerindustrie, in Fahrzeugen und anderen Fortbewegungsmitteln, in Schiffen, Raumschiffen, im Haushalt, in Büroausstattungen, Sport, in der Medizin sowie allgemein in Gegenständen und Gebäudeteilen die einen erhöhten Brandschutz erfordern angewandt werden.

Für den Küchen- und Haushaltsbereich ist der Einsatz fließverbesserter Polyamide zur Herstellung von Komponenten für Küchengerate, wie z.B. Friteusen, Bügeleisen, Knöpfe, sowie Anwendungen im Garten- und Freizeitbereich möglich.

### Beispiele

Es wurden folgende Komponenten verwendet:
Komponente A/1
   Polyamid 66 mit einer Viskositätszahl VZ von 150 ml/g, gemessen als 0.5 gew.-%ige Lösung in 96 gew.-%iger Schwefelsäure bei 25°C nach ISO 307 (Es wurde Ultramid® A27 der BASF SE verwendet).
Komponente A/2
   PA 66 mit VZ von 125 ml/g (Ultramid ® A24 der BASF SE)
Komponente B/1
   50%iges Konzentrat aus rotem Phosphor der mittleren Teilchengröße (d₅₀) von 10 bis 30 µm in einem Olefinpolymerisat aus: 59,8 Gew.% Ethylen, 35 Gew.% n-Butylacrylat, 4,5 Gew.% Acrylsäure und 0,7 Gew.% Maleinsäureanhydrid (Komponente D) mit einem Schmelzindex MFI (190/2.16) von 10 g/10min. Das Copolymerisat wurde durch Copolymerisation der Monomeren bei erhöhter Temperatur und erhöhtem Druck hergestellt.
Komponente B/2
   Pᵣₒₜ s.o. ohne Elastomer D)
Komponente C/1
   Kupferjodid
Komponente C/2
   Bis-(Triphenylphosphin)-Kupferjodid Komplex-CAS Nr.: 16109-82-3
Komponente E/1:
   Standard Schnittglasfaser für Polyamide, Länge = 4,5 mm, Durchmesser = 10 µm.
Komponente E/2:
   N,N'-Hexamethylen-bis-3,5-di-ter.-butyl-4-hydroxhydrocinnamid (Irganox® 1098)
Komponente E/3:
   Ca-stearat
Komponente E/4
   ZnO

### Herstellung der Formmassen

Zum Nachweis der erfindungsmäß beschriebenen Verbesserungen der Phosphorstäbilität wurden durch Compoundierung entsprechende Kunststoff-Formmassen angefertigt. Die einzelnen Komponenten wurden hierzu in einem Zweiwellenextruder ZSK 26 (Fa. Berstorff) bei einem Durchsatz von 20 kg/h und ca. 270°C bei flachem Temperaturprofil gemischt, als Strang ausgetragen, bis zur Granulierfähigkeit abgekühlt und granuliert.

Der Prüfkörper für die in Tabelle 1 aufgeführten Untersuchung wurden auf einer Spritzgießmaschine des Typs Arburg 420C bei einer Massetemperatur von ca. 270°C und einer Werkzeugtemperatur von ca. 80°C verspritzt. Bei den erfindungsgemäßen Beispielen wurde Komponente C) auf das getrocknete Granulat als Pulver aufgetrommelt.

Prüfung von Kunststoffteilen auf Phosphorausscheidung:
Ein Kunststoffstab (125 x 12.5 x 1.6 mm) wurde halbiert und je eine Hälfte in ein 10-ml-Becherglas gegeben. Ein aus Silber bestehendes Kontaktmaterial (10 x 50 x 0.125 mm) wurde in ein kurzes Reagenzglas gelegt. Anschließend stellte man die drei Proben in eine 100 ml Schraubdeckelflasche gibt 5 ml Wasser hinzu und stellte das verschlossene System bei 70° C in einen Trockenschrank. Nach 28 Tagen wurde das Reagenzglas entnommen, mit Wasser aufgefüllt und der gesamte Inhalt in ein Becherglas gegeben. Man fügte 5 ml konz. Salzsäure hinzu und dampfte fast bis zur Trockne ein. Der Metallstab wurde nun entnommen, mit Wasser abgespült, der Rückstand mit 1 ml Schwefelsäure versetzt und nochmals fast bis zur Trocknung eingeengt. Dann wird mit 20 ml Wasser verdünnt, 4 ml 5 %ige Kaliumperoxodisulfat-Lösung zugesetzt und 30 Minuten erhitzt. Die Phosphorbestimmung erfolgte nun photometrisch als Molybdänblau in µg Phosphor / Kunststoffstab.

### Farbmessung:

Die Farbmessung erfolgte nach DIN 53236:1983, Verfahren B. Gerechnet wurde nach DIN 6174:1979, welche übereinstimmt mit ISO 7724-3, sog. CieLab-Verfahren:
L* = Helligkeit; + ist weißer; - ist schwärzer
a* = Farbanteile; + röter; - grüner
b* = Farbanteile; + gelber; - blauer,
Der Wert Null bedeutet nicht bunt = unbunt = farblos.
C*ab = Buntheit (unbunt/bunt); h° ab = Bunttonwinkel (0 bis 360°).
L*, a* und b* zusammen bewertet ergibt den Farbabstand Δ E*.

### Der CTI Wert wurde gemäß IEC 60112 bestimmt.

Die Zusammensetzungen der nicht gefärbten Formmassen und die Ergebnisse der Messungen sind der Tabelle 1 zu entnehmen.

**Tabelle 1**

| Komponente | V1* | E1 | E2 | E3 | E4 | E5 | E6 |
|---|---|---|---|---|---|---|---|
| A/1 | 60.6 | 60.4 | 60.1 | 59.6 | 60.4 | 60.1 | 59.6 |
| B/1 | 12 | 12 | 12 | 12 | 12 | 12 | 12 |
| C/1 | | | | | 0.2 | 0.5 | 1.0 |
| C/2 | | 0.2 | 0.5 | 1.0 | | | |
| E/1 | 26 | 26 | 26 | 26 | 26 | 26 | 26 |
| E/2 + E/3 (50:50) | 0.7* | 0.7* | 0.7* | 0.7* | 0.7* | 0.7* | 0.7* |
| E/4 | 0.7 | 0.7 | 0.7 | 0.7 | 0.7 | 0.7 | 0.7 |
| Farbmessung /delta L | 31.3 | 26.5 | 24.0 | 19.7 | 20.4 | 18.0 | 17.3 |
| Farbmessung /delta a | 29.1 | 19.1 | 14.1 | 6.7 | 9.5 | 2.3 | 0.54 |
| Farbmessung /delta b | 22.8 | 15.1 | 10.6 | 4.0 | 6.3 | 0.8 | 0.10 |
| E-Modul/[MPa] | 8090 | 8050 | 8041 | 8073 | 8080 | 8101 | 8204 |
| Bruchspannung /[MPa] | 130 | 132 | 134 | 133 | 131 | 133 | 136 |
| Bruchdehnung /[%] | 3.6 | 3.2 | 3.1 | 3.2 | 3.6 | 3.6 | 3.5 |
| CTI /[V] | offen | offen | offen | offen | offen | offen | offen |
| Phosphorauscheidung nach 28 Tagen / 70° C in µg Phosphor/Stab | 480 | 150 | 60 | 54 | 8 | 5 | 2 |

| | | | | | | | |
|---|---|---|---|---|---|---|---|
| *) zum Vergleich | | | | | | | |

Anhand der Daten von Tabelle 1 geht hervor, dass die erfindungsgemäßen Zusammensetzungen gegenüber dem Stand der Technik eine sehr viel bessere Phosphorstabilität aufweisen (reduzierte Phosphorausscheidung). Darüber hinaus zeigt sich, dass die erfindungsgemäßen Zusammensetzungen eine "dunklere" Farbe (delta L-Wert kleiner) und weniger rot- bzw. gelbgefärbt sind (delta a- und delta b-Werte kleiner).

### Hellgefärbte PA-Formmassen

### Basisrezeptur für Tabelle 2

| | | |
|---|---|---|
| Komponente [Gew.-%] | A/2 | 44,1 |
| | B/2 | 2 |
| | D | 10 |
| | E/1 | 25 |
| | E/2 | 0,35 |
| | E/3 | 0,35 |
| | E/4 | 0,7 |
| | E/5 | 5 |
| | E/6 | 12,5 |
| | | |
| Komponente | E/5: | Titandioxid |
| Komponente | E/6: | Melaminpolyphosphat |

Die jeweiligen Komponenten C) (siehe Tabelle 2) wurden mit jeweils 1-Gew.% in o.g. Rezeptur eingearbeitet (PA Anteil betrug entsprechend 43,1-Gew.%).

### Miniextrusion

Die Einarbeitung der Proben mittels Miniextrusion erfolgte mit einem Micro 15-Extruder der Fa. DSM. Die Verarbeitung erfolgte bei 280 °C.

### Farbmessung siehe Tabelle 1

### Tageslichtalterung

Belichtung nach DIN EN ISO 11341 Method 2:0.35W/m²xnm) bei 340 nm, Belichtungsdauer 24h, Belichtungstemperatur 38 °C (+-2 °C), Belichtungsfeuchte 50 % (+ -10 %).

**Tabelle 2: Farbstabilität**

| | Farbmessung | | | Delta Farbmessung nach Bewitterung | | | |
|---|---|---|---|---|---|---|---|
| | L* | a* | b* | L* | a* | b* | Δ E |
| Basisformulierung (zum Vergleich) | 72 | 12 | 10 | 3,4 | -7,5 | -6,4 | 10,43 |
| +Ag(I)Cl | 63 | 1 | 3 | 0,22 | 0 | 0,13 | 0,25 |
| C/2 mit Kl (1:2) | 67 | 2 | 1 | 0,58 | -0,91 | 0,31 | 1,12 |
| + Cu(I)acetat | 64 | +1 | -1 | 0,9 | -0,23 | -0,14 | 0,94 |
| + Cu(I)Br | 62 | -1 | -4 | 0,21 | -0,2 | -0,1 | 0,30 |
| + Cu(I)Cl | 62 | -1 | -3 | 0,25 | -0,04 | -0,16 | 0,30 |
| + Cu(I)I | 64 | -1 | -3 | 0,31 | -0,28 | 0,35 | 0,68 |
| + Cu(I)₂O | 59 | -1 | -3 | 0,78 | -0,02 | -0,16 | 0,80 |
| + Cu(II)O (zum Vergleich) | 67 | 5 | 4 | 1,23 | -1,71 | 0,22 | 2,12 |
| + Cu(I)oxalat | 61 | -1 | -3 | 0,62 | -0,11 | -0,24 | 0,67 |
| Cu(I)SCN | 64 | -1 | -2,2 | 0,04 | -0,02 | -0,02 | 0,05 |

### Herstellung der Formmassen für Tabelle 3

Die Verarbeitung des thermoplastischen Materials erfolgte mittels eines Doppelschneckenextruders ZSK 25-F41 der Firma Leistritz mit einem Durchsatz von 30 kg/h. Die Extrusionstemperatur betrug 300 °C. Der Polymerstrang wurde mittels Wasserbad abgekühlt und im Anschluss granuliert und getrocknet. Der Spritzguss zu den verwendeten Prüfkörpern erfolgte bei 320 °C.

### Die mechanischen Eigenschaften wurden gemäß

| | |
|---|---|
| Zug-E-Modul: | DIN EN ISO 527-1/-2 |
| Bruchdehnung: | DIN EN ISO 527-1/-2 |
| Bruchspannung: | DIN EN ISO 527-1/-2 |
| Charpy Schlagzähigkeit: | DIN EN ISO 179 |

### gemessen.

Die Flammschutzprüfung erfolgte gemäß UL 94.

**Tabelle 3:**

| Komponenten | V1 | 1 | 2 | 3 |
|---|---|---|---|---|
| A/2 | 36,75 | 36,5 | 36,25 | 35,75 |
| B/2 | 1,85 | 1,85 | 1,85 | 1,85 |
| C/2 mit KI (1:2) | | 0,25 | 0,5 | 1 |
| D | 10 | 10 | 10 | 10 |
| E/1 | 25 | 25 | 25 | 25 |
| E/2 | 0,35 | 0,35 | 0,35 | 0,35 |
| E/3 | 0,35 | 0,35 | 0,35 | 0,35 |
| E/4 | 0,7 | 0,7 | 0,7 | 0,7 |
| E/5 | 12,5 | 12,5 | 12,5 | 12,5 |
| E/6 | 12,5 | 12,5 | 12,5 | 12,5 |
| | | | | |
| Mechanische Eigenschaften | | | | |
| E-Modul / MPa | 8353 | 7539 | 7373 | 7205 |
| Bruchspannung / MPa | 91 | 90 | 90 | 84 |
| Bruchdehnung / % | 1,8 | 2,4 | 2,2 | 1,9 |
| Charpy ungekerbt 23°C / kJ/m² | 42 | 43 | 43 | 38 |
| | | | | |
| UL 94 0,8mm 2d/23°C | | | | |
| Einstufung | V0 | V0 | V0 | V0 |
| | | | | |
| CTI Messung / V | Nicht gemessen | 400 | 400 | 400 |
| | | | | |
| Farbmessung | | | | |
| Δ L* | 77 | 76 | 72 | 70 |
| Δ a* | 7 | 6 | 3 | 1 |
| Δ b* | 6 | 6 | 2 | 0 |
| | | | | |
| Farbstabilität nach 24 h T rockenbewitterung | | | | |
| Δ L* | 79 | 78 | 73 | 70 |
| Δ a* | 3 | 3 | 2 | 0,24 |
| Δ b* | 4 | 4 | 2 | 2 |
| Δ E* | 4,7 | 3,5 | 1,0 | 2,5 |

## Patentansprüche

1. Verwendung von Cu- und/oder Ag-Verbindungen C) zur Herstellung von thermoplastischen Formmassen, enthaltend
A) 10 bis 99,8 Gew.-% eines thermoplastischen Polyamids,
B) 0,1 bis 60 Gew.-% roter Phosphor,
C) 0,01 bis 4 Gew.-% eines Cu-(I)- oder Ag-(I)-Salzes oder -Oxids oder-Komplexes oder deren Mischungen,
D) 0 bis 40 Gew.-% eines Schlagzähmodifiers,
E) 0 bis 60 Gew.-% weiterer Zusatzstoffe,
wobei die Summe der Gewichtsprozente A) bis E) 100 % ergibt, wobei die Formmassen mindestens 15 % niedrigere Δ L Farbwerte im Vergleich zu PA Formmassen ohne Komponente C) gemäß Anspruch 1 (gemäß DIN 53236 und ISO 7724-3, CieLab Verfahren) aufweisen.

2. Verwendung nach Anspruch 1, wobei die thermoplastischen Formmassen enthalten
A) 20 bis 98 Gew.-%
B) 0,5 bis 40 Gew.-%
C) 0,1 bis 3 Gew.-%
D) 1 bis 30 Gew.-%
E) 0 bis 50 Gew.-%

3. Verwendung nach den Ansprüchen 1 oder 2, in denen die Komponente C) in Mischung mit einem Alkalihalogenid eingesetzt wird.

4. Verwendung nach den Ansprüchen 1 bis 3, wobei das Alkalihalogenid Kaliumbromid oder Kaliumjodid oder deren Mischungen ist.

5. Verwendung nach den Ansprüchen 1 bis 4, in denen die Komponente C) ein Ag-(I)- oder Cu-(I)-Komplex ist, der als Liganden Triphenylphosphine, Trialkylphosphine, Mercaptobenzimidazole, EDTA, Acetylacetone, Glycin, Ethylendiamine, Oxalate, Diethylentriamine, Triethylentetramine, Pyridine, Diphosphone, Dipyridyle oder deren Mischungen enthält.

6. Verwendung nach den Ansprüchen 1 bis 5, in denen die Komponente C) aus Cu₂O, Ag₂O, Cu-(I)-Halogeniden, Ag-(I)-Halogeniden, CuSCN, AgSCN, Cu-(I)- oder Ag-(I)-Carbonsäuresalzen aufgebaut ist.

7. Verwendung nach den Ansprüchen 1 bis 6, wobei die Halogenide C) aus CuF, Cul, CuBr, AgI, AgBr, AgCl, CuCl und die Carbonsäuresalze C) aus Acetaten, Oxalaten, Stearaten, Propionaten, Butyraten, Benzoaten oder deren Mischungen, bestehen.

8. Verwendung nach den Ansprüchen 1 bis 7, in denen die Komponente C) im Mischungsverhältnis 1:10 bis 1:1 mit einem Alkalihalogenid vorliegt.

9. Verwendung der thermoplastischen Formmassen gemäß den Ansprüchen 1 bis 8 zur Herstellung von Fasern, Folien und Formkörpern.

10. Fasern, Folien und Formkörper, erhältlich aus thermoplastischen Formmassen gemäß den Ansprüchen 1 bis 8.

11. Verwendung von Cu- und/oder Ag-Verbindungen C) gemäß Anspruch 1 zur Herstellung von Formmassen gemäß Anspruch 1 oder Formkörpern gemäß Anspruch 10 mit mindestens 35 % niedrigeren Δ a Farbwerten im Vergleich zu PA Formmassen ohne Komponente C) gemäß Anspruch 1 (gemäß DIN 53236 und ISO 7724-3, CieLab Verfahren).

12. Verwendung von Cu- und/oder Ag-Verbindungen C) gemäß Anspruch 1 zur Herstellung von Formmassen gemäß Anspruch 1 oder Formkörpern gemäß Anspruch 10 mit mindestens 35 % niedrigeren Δ b Farbwerten im Vergleich zu PA Formmassen ohne Komponente C) gemäß Anspruch 1 (gemäß DIN 53236 und ISO 7724-3, CieLab Verfahren).

13. Verwendung von Cu- und/oder Ag-Verbindungen C) gemäß Anspruch 1 zur Herstellung von Formmassen gemäß Anspruch 1 oder Formkörpern gemäß Anspruch 10 mit Phosphorausscheidungswerten (28 Tage/70 °C) von unter 200 µg Phosphor/Probekörper gemäß Testmethode S. 22, Zeile 39 bis S. 23, Zeile 9, der Beschreibung.

## Claims

1. The use of Cu compounds and/or Ag compounds C) for the production of thermoplastic molding compositions comprising
A) from 10 to 99.8% by weight of a thermoplastic polyamide,
B) from 0.1 to 60% by weight of red phosphorus,
C) from 0.01 to 4% by weight of a Cu(I) salt or Ag(I) oxide or Cu(I) complex or Ag(I) salt or Cu(I) oxide or Ag(I) complex, or a mixture of these,
D) from 0 to 40% by weight of an impact modifier, and
E) from 0 to 60% by weight of further additional substances,
where the total of the percentages by weight of A) to E) is 100%, where the molding compositions have Δ L color values at least 15% lower than those of PA molding compositions without component C) according to claim 1 (in accordance with DIN 53236 and ISO 7724-3, CieLab method).

2. The use according to claim 1, where the thermoplastic molding compositions comprise
A) from 20 to 98% by weight
B) from 0.5 to 40% by weight
C) from 0.1 to 3% by weight
D) from 1 to 30% by weight
E) from 0 to 50% by weight.

3. The use according to claim 1 or 2, in which component C) is used in a mixture with an alkali metal halide.

4. The use according to claims 1 to 3, where the alkali metal halide is potassium bromide or potassium iodide, or a mixture of these.

5. The use according to claims 1 to 4, in which component C) is an Ag(I) complex or Cu(I) complex which respectively comprises, as ligands, triphenylphosphines, trialkylphosphines, mercaptobenzimidazoles, EDTA, acetylacetones, glycine, ethylenediamines, oxalates, diethylenetriamines, triethylenetetramines, pyridines, diphosphones, dipyridyls, or a mixture of these.

6. The use according to claims 1 to 5, in which component C) is composed of Cu₂O, Ag₂O, Cu(I) halides, Ag(I) halides, CuSCN, AgSCN, Cu(I) carboxylates, or Ag(I) carboxylates.

7. The use according to claims 1 to 6, where the halides C) are composed of CuF, CuI, CuBr, AgI, AgBr, AgCl, CuCl, and the carboxylates C) are composed of acetates, oxalates, stearates, propionates, butyrates, benzoates, or a mixture of these.

8. The use according to claims 1 to 7, in which component C) is present with an alkali metal halide in a mixing ratio of from 1:10 to 1:1.

9. The use of the thermoplastic molding compositions according to claims 1 to 8 for the production of fibers, foils, and moldings.

10. A fiber, foil, or molding obtainable from thermoplastic molding compositions according to claims 1 to 8.

11. The use of Cu compounds and/or Ag compounds C) according to claim 1 for the production of molding compositions according to claim 1, or of moldings according to claim 10, with Δ a color values at least 35% lower than those of PA molding compositions without component C) according to claim 1 (in accordance with DIN 53236 and ISO 7724-3, CieLab method).

12. The use of Cu compounds and/or Ag compounds C) according to claim 1 for the production of molding compositions according to claim 1, or of moldings according to claim 10, with Δ b color values at least 35% lower than those of PA molding compositions without component C) according to claim 1 (in accordance with DIN 53236 and ISO 7724-3, CieLab method).

13. The use of Cu compounds and/or Ag compounds C) according to claim 1 for the production of molding compositions according to claim 1, or of moldings according to claim 10, with phosphorus release values (28 days/70°C) of less than 200 µg of phosphorus/specimen in accordance with the test method on page 22, line 39 to page 23, line 9 of the description.

## Revendications

1. Utilisation de composés C) contenant du Cu et/ou de l'Ag, pour la production de matières à mouler thermoplastiques contenant
A) 10 à 99,8 % en poids d'un polyamide thermoplastique,
B) 0,1 à 60 % en poids de phosphore rouge,
C) 0,01 à 4 % en poids d'un sel ou oxyde ou complexe de Cu-(I) ou d'Ag-(I) ou de mélanges de ceux-ci,
D) 0 à 40 % en poids d'un modificateur antichoc,
E) 0 à 60 % en poids d'autres additifs,
la somme des pour cent en poids A) à E) étant égale à 100 %, les matières à mouler présentant des valeurs colorimétriques Δ L inférieures d'au moins 15 % par rapport à des matières à mouler PA sans composant C) selon la revendication 1 (conformément à DIN 53236 et ISO 7724-3, procédé CieLab).

2. Utilisation selon la revendication 1, dans laquelle les matières à mouler thermoplastiques contiennent
A) 20 à 98 % en poids
B) 0,5 à 40 % en poids
C) 0,1 à 3 % en poids
D) 1 à 30 % en poids
E) 0 à 50 % en poids.

3. Utilisation selon la revendication 1 ou 2, dans laquelle le composant C) est utilisé en mélange avec un halogénure de métal alcalin.

4. Utilisation selon les revendications 1 à 3, dans laquelle l'halogénure de métal alcalin est le bromure de potassium ou l'iodure de potassium ou des mélanges de ceux-ci.

5. Utilisation selon les revendications 1 à 4, dans laquelle le composant C) est un complexe d'Ag-(I) ou de Cu-(I) qui contient comme ligands des triphényl-phosphines, des trialkylphosphines, des mercaptobenzimidazoles, de l'EDTA, des acétylacétones, de la glycine, des éthylènediamines, oxalates, diéthylène-triamines, triéthylènetétramines, pyridines, diphosphones, dipyridyles ou des mélanges de ceux-ci.

6. Utilisation selon les revendications 1 à 5, dans laquelle le composant C) est constitué de Cu₂O, d'Ag₂O, d'halogénures de Cu-(I), d'halogénures d'Ag-(I), de CuSCN, d'AgSCN, de carboxylates de Cu-(I) ou d'Ag-(I).

7. Utilisation selon les revendications 1 à 6, dans laquelle les halogénures C) consistent en CuF, CuI, CuBr, AgI, AgBr, AgCl, CuCl et les sels d'acides carboxyliques C) consistent en acétates, oxalates, stéarates, propionates, butyrates, benzoates ou des mélanges de ceux-ci.

8. Utilisation selon les revendications 1 à 7, dans laquelle le composant C) est présent en un rapport de mélange avec un halogénure de métal alcalin de 1:10 à 1:1.

9. Utilisation des matières à mouler thermoplastiques selon les revendications 1 à 8, pour la production de fibres, films et corps moulés.

10. Fibres, films et corps moulés, pouvant être obtenus à partir de matières à mouler thermoplastiques selon les revendications 1 à 8.

11. Utilisation de composés de Cu et/ou d'Ag C) selon la revendication 1, pour la production de matières à mouler selon la revendication 1 ou de corps moulés selon la revendication 10, ayant des valeurs colorimétriques Δ a inférieures d'au moins 35 % par rapport à des matières à mouler PA sans composant C) selon la revendication 1 (conformément à DIN 53236 et ISO 7724-3, procédé CieLab).

12. Utilisation de composés de Cu et/ou d'Ag C) selon la revendication 1, pour la production de matières à mouler selon la revendication 1 ou de corps moulés selon la revendication 10, ayant des valeurs colorimétriques Δ b inférieures d'au moins 35 % par rapport à des matières à mouler PA sans composant C) selon la revendication 1 (conformément à DIN 53236 et ISO 7724-3, procédé CieLab).

13. Utilisation de composés de Cu et/ou d'Ag C) selon la revendication 1, pour la production de matières à mouler selon la revendication 1 ou de corps moulés selon la revendication 10, ayant des valeurs d'émission de phosphore (28 jours/70 °C) de moins de 200 µg de phosphore/éprouvette selon la méthode d'essai p. 22, ligne 39 à p. 26, ligne 9 de la description.
